## Europäisches Patentamt
## European Patent Office
## Office européen des brevets

(19)

(11) Publication number: **0 038 820**
**B1**

(12) **EUROPEAN PATENT SPECIFICATION**

(45) Date of publication of patent specification: **12.11.86**

(51) Int. Cl.⁴: **B 23 K 35/22**

(21) Application number: **80902018.3**

(22) Date of filing: **16.09.80**

(86) International application number:
**PCT/US80/01250**

(87) International publication number:
**WO 81/00820 02.04.81 Gazette 81/08**

(54) **CAST IRON WELDING MATERIALS.**

(30) Priority: **19.09.79 US 77038**

(43) Date of publication of application:
**04.11.81 Bulletin 81/44**.

(45) Publication of the grant of the patent:
**12.11.86 Bulletin 86/46**

(84) Designated Contracting States:
**AT CH DE FR GB LI LU NL SE**

(56) References cited:
**FR-A-2 280 475**
**US-A-1 815 464**
**US-A-2 156 306**
**US-A-2 266 762**
**US-A-2 875 104**
**US-A-3 266 876**
**US-A-3 851 142**
**US-A-4 087 673**

The file contains technical information
submitted after the application was filed and
not included in this specification

(73) Proprietor: **Research Corporation**
**405 Lexington Avenue**
**New York, N.Y. 10017 (US)**

(72) Inventor: **OLSON, David L.**
**13943 West 20th Place**
**Golden, CO 80401 (US)**
Inventor: **DAVILA MARQUEZ, Alfredo**
**Intevep Apartado 76343**
**Caracas 1070-A (VE)**

(74) Representative: **Vossius & Partner**
**Siebertstrasse 4 P.O. Box 86 07 67**
**D-8000 München 86 (DE)**

Courier Press, Leamington Spa, England.

EP 0 038 820 B1

## Description

The cast irons are a family of iron alloys containing 1.8 to 4.5% carbon. The family includes gray iron (ca. 3.4% C), malleable iron (ca. 2.5% C), and ductile iron (ca. 3.4% C). The cast irons, especially ductile iron, possess many of the physical properties of steel, such as strength and toughness. These irons are increasingly being used to replace steel castings since they are cheaper and require less energy to produce. In order to realize their full potential, however, it is necessary to develop new and acceptable methods of welding cast iron parts.

Many prior patents disclose welding compositions useful for welding iron or steel. For example, US—A—3,266,876 discloses a ferrous weld deposit containing 0.4 to 1% carbon, 9.5 to 31% manganese, and 2.5 to 35% nickel. The patent discloses that this composition retains useful properties at temperatures of −320°F (−195°C.). However, this patent does not deal with the special problems encountered in welding cast irons. Also, US—A—1,815,464 discloses a general range of compositions for welding purposes which, however, are intended for welding manganese steel castings. US—A—3,851,142 refers to a cored wire welding electrode for welding cast iron having an outer sheath made of nickel or a nickel-iron alloy and a powdered core composition containing copresent metallic magnesium and graphite and slag-forming ingredients along with special amounts of manganese.

Because of their high carbon content, two major problems arise in the fusion welding of cast irons: (a) the formation of massive carbides in regions of the parent metal that are melted or partially melted during the weld pass, and (b) the formation of martensite in regions of the parent metal that are heated to a temperature above the eutectoid but below the eutectic. Both carbide and martensite formation result in weld zones having properties different from those of the base metal. Thus, the weld zone may be lower in strength, lower in ductility, and most significantly, more brittle than the surrounding metal.

Two approaches to the fusion welding of cast irons have been used to achieve sound welds. In the first approach, nodular graphite is produced in the weld which resembles the graphite contained in the base metal. This is accomplished by adding graphitizing agents, such as silicon, and nodularizing agents, such as magnesium or rare earth metals, to the weld metal from the welding rod or flux. In this way, a weld metal is produced which has a microstructure, mechanical properties, and thermal expansion properties similar to those of the base metal.

In the second approach, nickel or copper is added as filler material to the weld pool to produce an austenitic weld metal. The austenitic weld metal is tough, relatively soft, and exhibits other favorable properties. Satisfactory welds are produced by this approach because the eutectoid transformation to martensite is avoided and because of the ability of austenite to absorb carbon rejected by the melted cast iron, thus reducing the formation of carbides.

Nickel works successfully in this second approach because it is an austenite phase stabilizer. When present in austenite, it shifts the eutectoid point so as to suppress the transformation of austenite into pearlite. Nickel is therefore classified as an austenite former.

At present, nickel is typically introduced into the weld pool as an ingredient of the welding rods. Nickel-base covered electrodes are available for the arc welding of cast irons. These electrodes are classified as "pure" nickel, containing 90 to 95% Ni, nickel-iron, containing about 55% Ni, and nickel-copper, containing about 60% Ni. The "pure" nickel and nickel-iron electrodes have emerged as the most satisfactory thus far for welding cast iron.

The use of nickel as filler material for welding cast iron presents several problems. First, nickel is expensive. Second, the thermal properties of nickel are significantly different from those of cast iron and give rise to thermal expansion mismatch between base metal and weld metal. This can result in stresses high enough to cause cracking. Third, phosphorus has low solubility in nickel. This too can result in cracking when nickel-base electrodes are used in weld irons high in phosphorus.

Accordingly, it is an object of the present invention to provide a ferrous weld structure, comprising a cast iron base metal and a weldment containing nickel and manganese which is produced with the use of a filler material with substantially reduced nickel content.

With the present invention the mismatch between the thermal properties of the fusion zone and the base metal, should be reduced and a fusion zone of acceptable strength and toughness should be obtained.

This object is achieved by a ferrous weld structure comprising a cast iron base metal and a weldment containing nickel and manganese, which is characterized in that for the production of the weldment a filler composition consisting of about 10 to 35% nickel and about 15 to 50% manganese, the balance being substantially iron, has been used.

A filler material containing 20% manganese and 20% nickel has been found to provide optimal results.

Fig. 1 illustrates the volume percent of carbides in the weld metal as a function of the manganese and nickel content in the flux.

Fig. 2 illustrates the volume percent of austenite in the weld metal as a function of the manganese and nickel content in the flux.

Fig. 3 illustrates the weld metal hardness as a function of the manganese and nickel content in the flux.

Fig. 4 illustrates the width of the heat affected zone and the temperature of the weld pool as a function of the manganese and nickel content in the flux.

Fig. 5 graphically illustrates the hardness profile of the weldments as a function of the manganese and nickel content in the flux.

Fig. 6 graphically illustrates the average coefficient of thermal expansion as a function of the temperature of weld metal made with manganese-nickel filler compositions.

Fig. 7 also graphically illustrates the average coefficient of thermal expansion as a function of the temperature of weld metal made with manganese-nickel filler compositions.

Fig. 8 illustrates the average coefficient of thermal expansion of weld metal at 850°C. as a function of the manganese and nickel content in the flux.

Fig. 9 illustrates the range of flux compositions which produce a desirable microstructure, width of the heat affected zone, and coefficient of thermal expansion in the welding of cast iron.

Manganese like nickel, acts as an austenite phase stabilizer and promotes formation of austenitic phase fusion zones. These zones absorb large amounts of carbon and other interstitial elements from melted cast iron. Carbide formation, and the brittleness associated with it, are thereby suppressed.

Among the advantages of replacing nickel with manganese are the following:

(a) Filler materials based on manganese-nickel alloys have a lower melting temperature than nickel-based alloys. Thus, less heat is required during welding. This results in savings and also decreases the cracking susceptibility in the partially melted region of the heat affected zone.

(b) Substantial manganese additions reduce the hardness of the fusion zone and achieve better mechanical properties than found with high nickel filler materials.

(c) Manganese-nickel filler materials achieve excellent thermal expansion compatibility with the base metal and better machinability than high nickel filler materials.

(d) Manganese is cheaper than nickel.

It has been demonstrated that 55% manganese metal powder additions to a neutral commercial submerged arc weld flux can produce lower fusion zone hardness in ductile iron weldments than found with iron-55% nickel filler metal wire. Filler compositions containing 10 to 35% nickel and 15 to 50% manganese provide even further improvements in cast iron weldment properties. For example, a mixture of 50% manganese and 10% nickel achieved the lowest weld hardness. It has also been shown that mixtures of manganese and nickel are better than either manganese or nickel alone for austenite stabilization. A filler composition containing 20% manganese and 20% nickel was found to be optimal for reducing the propensity to crack, increasing machinability, and achieving the greatest economy.

The filler compositions used in the present invention may be used to weld cast iron to base metals made of either cast iron or other materials, such as steel, stainless steel, and high nickel alloys.

All methods and processes which may be used to introduce filler materials to the weld pool are considered part of the present invention. The filler materials used in the present invention may be added as part of the flux. Alternatively, the filler materials may be incorporated into a welding rod or wire. The filler materials may be coated onto or be contained within such welding rods and wires. The filler materials may be introduced into the weld pool through a combination of welding rod and flux additions,

The filler compositions used in the present invention are useful for all methods of fusion welding cast iron. For example, the compositions may be used advantageously in the practice of submerged arc welding or gas metal arc welding. The compositions may also be used advantageously in the practice of gas welding, such as oxy-acetylene welding.

Experimental results

A series of tests were conducted to demonstrate the usefulness of the filler compositions within the scope of the present invention.

Plates made of ductile iron containing 3.80% carbon were prepared for testing. Fifty 1000 g flux samples were then prepared by mixing various amounts of 99.9% pure Mn and Ni powder (150 μm average) with Hobart H-700 SAW flux. The filler metal came from a Page Corporation type E1-12 1/8 diameter low carbon steel welding wire.

Weld deposits were produced using the submerged arc weld process. The welding parameters used in this investigation were selected to produce a constant heat input of 35 KJ/cm. The welding voltage was 30 volts with a travel speed of 24.4 cm per minute, and the current was approximately 500 A. Using these parameters and the fluxes already described, single-pass bead-on-plate specimens were made on the pearlitic ductile iron base metal plate which had been ground prior to welding to remove any oxide scale. The weldments were made in the flat position using direct current reverse polarity. The specimens were allowed to cool to room temperature before the flux cover was removed. To investigate the temperatures profiles produced by welding with some of these fluxes, ten thermocouples were placed at intervals across certain specimens.

1. Effects of manganese and nickel on the fusion zone

Fifty weld specimens were prepared and microscopically examined to observe the effects of nickel and manganese additions to the welding fluxes on the microstructure and properties of the fusion zone.

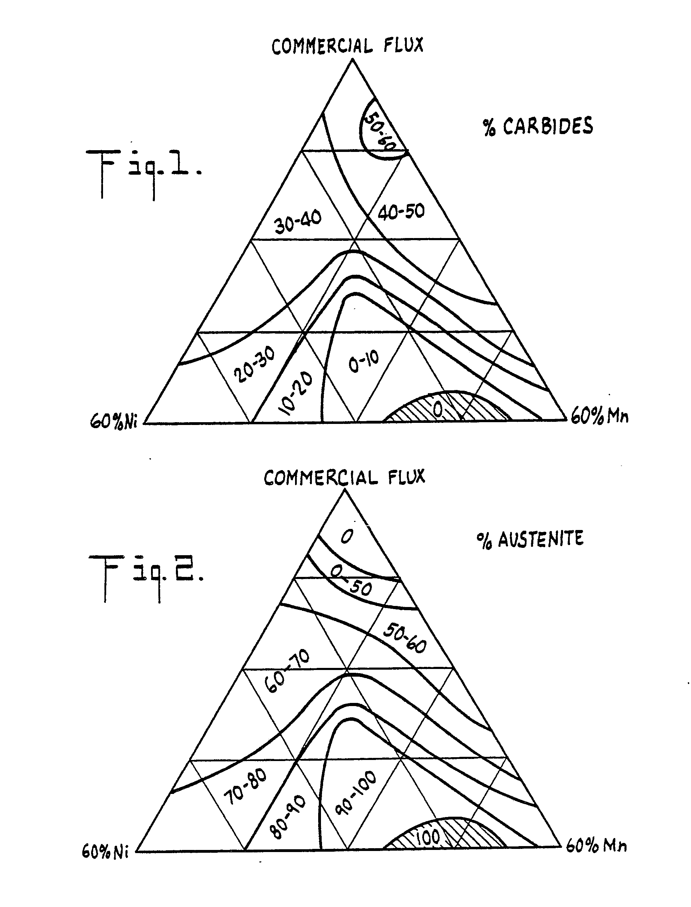

Figure 1 shows the volume percent of carbides in the fusion zone as a function of flux composition. With no manganese or nickel additions to the flux, the structure is carbides and very fine pearlite, as compared to the pearlite of the ductile iron base metal. The maximum amount of carbides in the fusion zone resulted with a 10% Mn addition to the flux. Small amounts of nickel in the flux are more effective than small amounts of manganese in reducing the amount of carbides, but for large additions this trend is reversed, as indicated by the close spacing of the lines on the lower part of the manganese side of this diagram. The smallest amounts of carbides are found in welds made with fluxes containing both manganese and nickel.

The reduction in amount of carbides causes a decrease in carbide continuity, and eventually carbide-free zones are produced in the flux composition range which is illustrated as cross-hatched in Figure 1. Fluxes which produced fusion zones with discontinuous carbides occupy a larger range, lying roughly within the 0—10% carbide region.

Furthermore, micrographs of the samples suggest that the manganese additions are not only more effective than nickel in reducing amounts of carbides, but are also more effective in making the carbides discontinuous when comparable amounts of carbide are present. The most important practical aspect of carbide content and morphology is the strong effect on machinability. Machinability was simulated by drilling tests which were done on various fusion zone samples. These tests showed that, qualitatively, drilling was faster and easier as carbide content and continuity decreased.

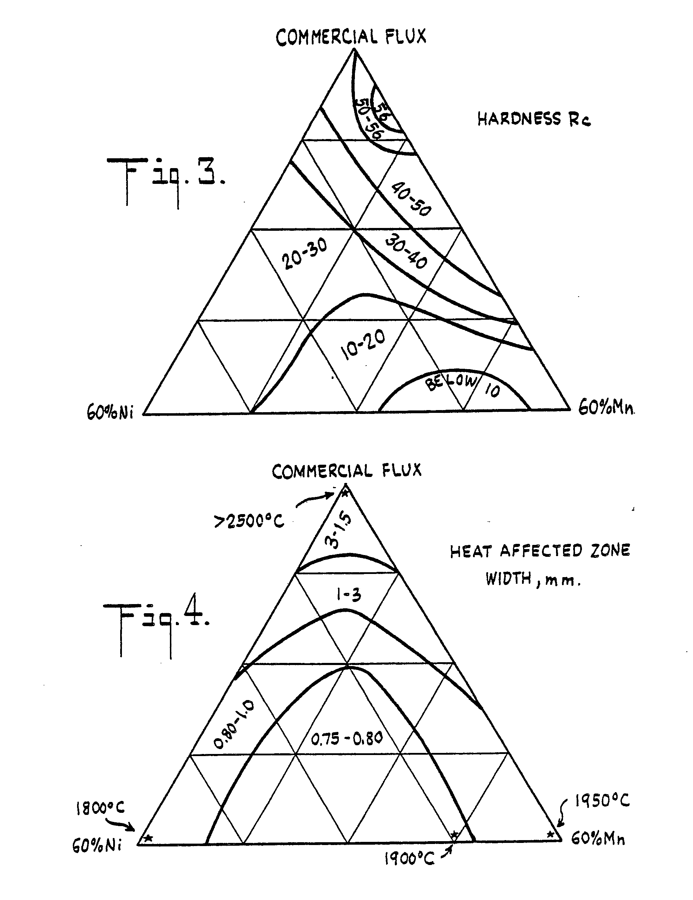

Figure 2, which relates to the amount of retained austenite in the weld metal to flux composition, shows some similarities to Figure 1. The amount of retained austenite increases with the alloy content of the flux. Also, fusion zones produced with high alloy fluxes contain either austenite or carbide, so the lower section is accompanied by an equal increase in austenite. Therefore, the carbide-free zone in Figure 1 is matched by a 100% austenite area in Figure 2. However, this is not true in the low alloy regions where the microstructures contain significant amounts of other microconstituents, such as pearlite and martensite.

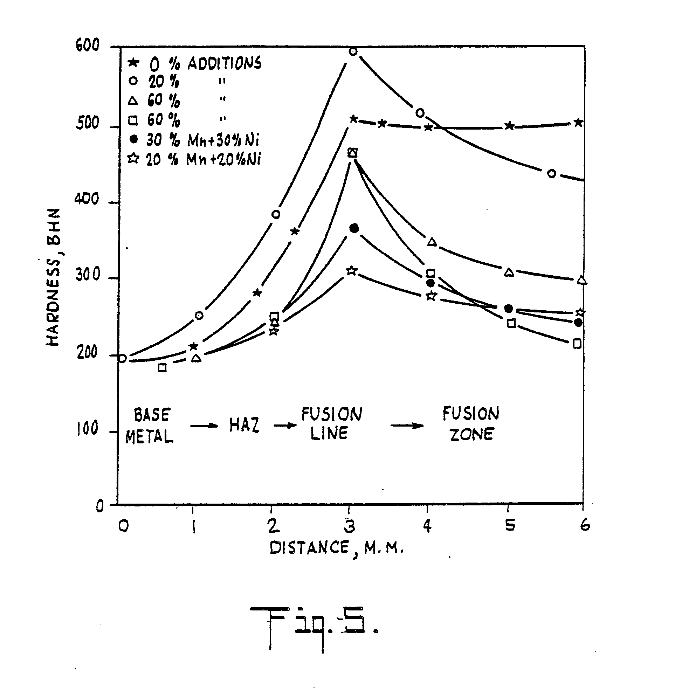

Again, the relative effectiveness of manganese and nickel changes as total allow content increases. Nickel is the more effective austenite stabilizer in low amounts, since at least 10% Ni in the fusion zone is needed to produce stable austenite; but Figure 3 shows that manganese is more effective in large additions. The two figures also show that combinations of manganese and nickel are better than either manganese or nickel alone for austenite stabilization.

Fluxes containing small amounts of manganese produced more martensite than those with no alloy additions. This is probably due to the increase in hardenability provided by small amounts of manganese. In some low-alloy welds, hard nodules were found.

The graphitizing effect of nickel was evident from the micrographs which showed that graphite formed in the spaces between dendrites in a type D flake morphology. Residual amounts of nodularizing agents caused some spheres of graphite to form with the flakes. Type D graphite is damaging to mechanical integrity, and, all other things being equal, it would be better to produce no graphite by using Mn than to produce deleterious graphite with nickel. However, the graphite does help to reduce thermal expansion.

Since hardness is strongly influenced by microstructure, Figure 3 is very similar to Figure 2 and even more so to Figure 1. The isolated regions of high hardness are caused by the tendency toward increased hardenability and carbide formation when small amounts of manganese are used. Conversely, the region of very low hardness at the bottom of Figure 3 is caused by the lack of carbides in the samples. Between these two extremes, the fusion zone hardness decreases as the amount of carbide is reduced by increasing alloy additions. The higher hardness values of samples in which nickel is the main alloy element may be caused in part by the greater continuity of the carbide networks in these samples, as discussed above.

2. Effects of manganese and nickel on the heat affected zone

One problem which is common to both filler metal approaches is that as the base metal is heated above the eutectoid temperature, the dissolution of the graphite spheroids increases the carbon content of the surrounding matrix in the heat-affected zone. Upon cooling, this carbon-enriched matrix may transform to produce carbides and martensite. This concern over continuous carbide formation in the heat affected zone (HAZ) suggests using welding procedures with low heat input.

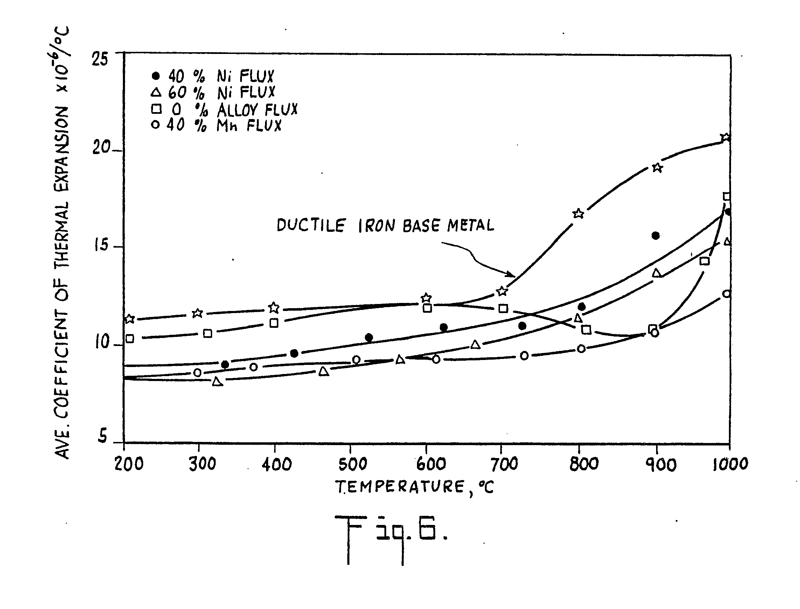

The heat affected zone varied significantly with flux composition, as shown in Figure 4. Also shown in this figure are the best estimates of the temperature of the weld pools produced by these fluxes. As indicated, the HAZ widths show no completely consistent correlation with the pool temperatures.

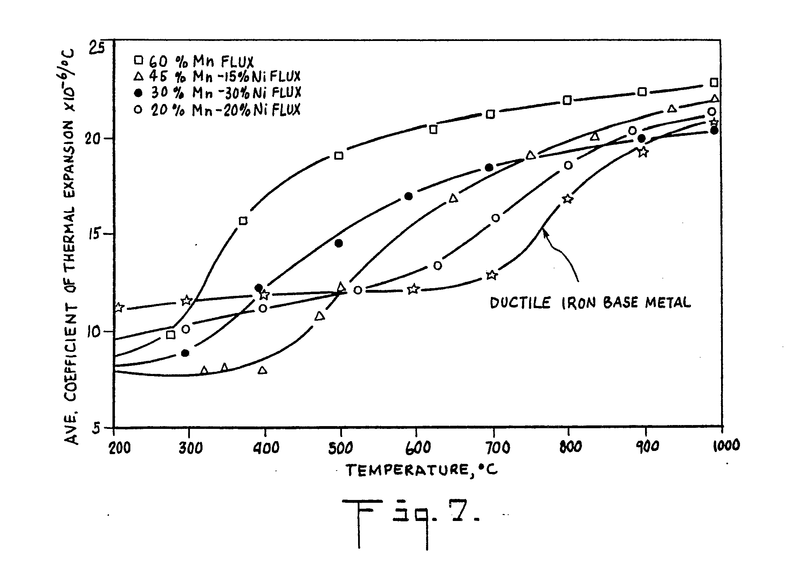

The hardness profiles in Figure 5 show large variations in peak fusion line hardness as the flux compositions change. These variations may be influenced by the maximum fusion zone temperature, but the hardenability and austenite stabilizing effects of the alloy additions were probably more significant in causing the variations. Flux composition also had a strong influence on fusion zone hardness as discussed earlier.

By comparing Figure 5 with micrographs, it is seen that the changes in peak hardness reflect vastly different fusion line and HAZ microstructures for different filler compositions. Fusion lines resulting from 30% Mn-30% Ni and 20% Mn-20% Ni fluxes are narrow and relatively soft. The lack of carbides in these fusion lines suggest that the fusion zone solidified below the base metal eutectic temperature; conversely, the large amount of carbides in the fusion zone made without flux additions is evidence of a fusion zone which solidified at a temperature much higher than that of the base metal eutectic. The hardest HAZ, made with 20% Mn flux, had this same type of microstructure. Heat affected zones intermediate in carbide content and carbide continuity result when the fusion zone melting point is slightly above the base metal eutectic.

Sequential micrographs demonstrate many of the fusion line and heat affected zone concepts discussed previously. Away from the fusion zone, the maximum local base metal temperature is not high enough to effect any phase transformations and the base metal is virtually unchanged.

Moving toward the fusion zone, and thus toward higher maximum temperatures, the unaffected base metal gives way to the HAZ. In this region, temperatures between the eutectoid and eutectic range are reached. Diffusion of carbon from the graphite nodules into the surrounding austenite and the subsequent austenite transformation upon cooling give rise to a variety of microstructures in the HAZ. In low-temperature regions, carbon diffuses away from the nodules during heating and back toward the nodules during cooling. This leaves a band of high-carbon austenite which transforms to make a ring of pearlite colonies within the ferrite ring. Higher temperature regions contain martensite because the more extensive diffusion of carbon produced a higher-carbon austenite, and because the higher cooling rates in these regions suppressed the pearlite reaction.

Where temperatures are high enough to be in the liquid plus austenite ranges, incipient melting occurs. The nodules partially decompose in the eutectic reaction to produce a shell of high-carbon liquid. This liquid transforms to austenite plus carbide because of the high cooling rates. Bordering on the fusion zone, the carbide shells connect to each other or open into the fusion zone to form fusion lines of various morphologies. Finally, the fusion zone is reached, and consists of austenite and carbides in amounts determined by the fusion zone composition.

3. Effects of manganese and nickel on the coefficient of thermal expansion

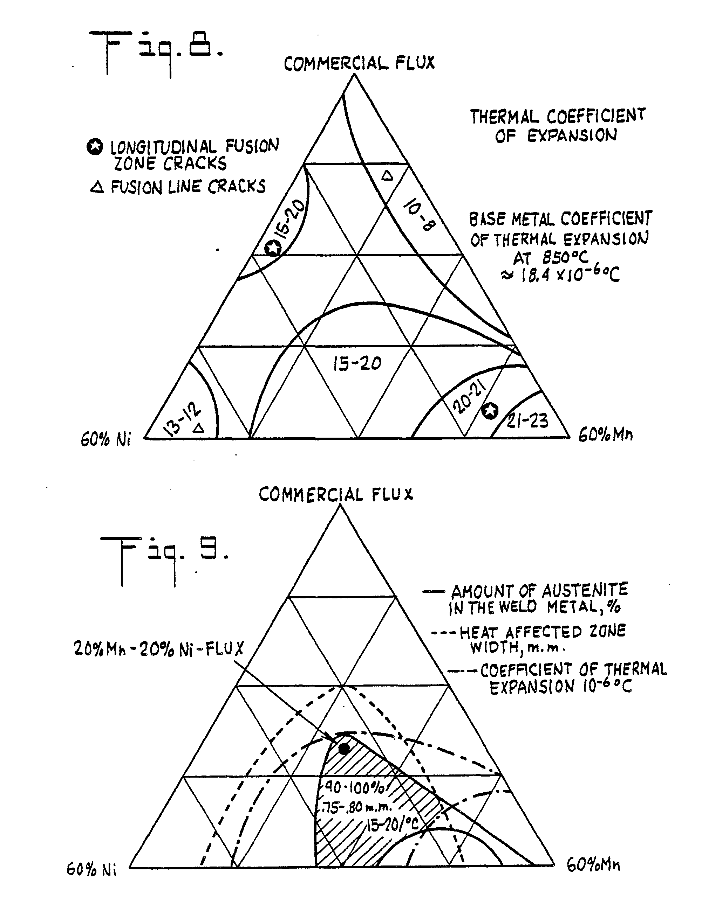

The average coefficient of thermal expansion was measured as a function of temperature for selected samples, and the results are plotted in Figures 6 and 7. The curves for base metal and welds with no flux additions show changes in slope due to the pearlite to austenite transformation. As shown, the 60% Ni flux produces welds with lower coefficients of thermal expansion than that of the base metal, while welds made with the 60% Mn flux have larger coefficients of thermal expansion (α). Large amounts of carbides in the weld, as in the 40% Mn sample, reduce the coefficient of thermal expansion.

The effects of flux composition on thermal expansion are presented in a more general way in Figure 8 which shows the value of α at 850°C. Also shown, are symbols which indicate the types of cracking found in each zone of α values. As a rule, the welds with high value of α showed longitudinal fusion zone cracks because of residual tensile stresses in the bead. On the other hand, welds with very low values of thermal expansion tend to develop compressive stresses on the bead, which can result in fusion line cracks at the very bottom of the fusion zone.

By showing the general trends in α, Figure 8 suggests ways of optimizing the flux composition. To reduce cracking tendencies, the coefficient of expansion of the fusion zone should match that of the base metal ($18.4 \times 10^{-6}/°C$. at 850°C). By reducing the nickel content of fluxes containing only nickel, α increases towards the value for the base metal. At the same time, however, excessive amounts of carbide cause hardness and machinability problems. Similarly, reducing the manganese content of fluxes with only manganese will cause α to decrease towards the value for the base metal, but excessive carbides would again cause problems. Suitable values of α and acceptable hardness can be produced with certain fluxes along the 60% total alloy line. Satisfactory results may also be obtained using similar alloy additions when the flux composition is near the 20% Mn-20% Ni point.

4. Chemical analysis of the fusion zone

Several samples were chemically analyzed to determine fusion zone composition. From this, the recovery of the alloy elements from the flux was calculated. It was found that the recovery of nickel was higher than that of manganese. On the average, the recovery of manganese was 64% and the recovery of nickel was 83%. The chemical analysis and recovery in each sample are presented in Table I.

TABLE I

| Flux composition | % Mn in fusion zone | % Ni in fusion zone | % C in fusion zone | % Mn recovered | % Ni recovered |
|---|---|---|---|---|---|
| 0% Mn— 0% Ni | 1.22 | 0.05 | 2.06 | — | — |
| 0% Mn—20% Ni | — | 12.6 | 2.83 | — | 63 |
| 0% Mn—40% Ni | — | 23.3 | 1.90 | — | 58 |
| 0% Mn—60% Ni | — | 39.4 | 1.80 | — | 66 |
| 10% Mn—10% Ni | 6.2 | 9.6 | 1.80 | 62 | 96 |
| 20% Mn—20% Ni | 13.1 | 15.9 | 1.12 | 66 | 80 |
| 30% Mn—30% Ni | 20.2 | 34.3 | 1.21 | 67 | 114 |
| 20% Mn— 0% Ni | 13.4 | — | 2.10 | 67 | — |
| 40% Mn— 0% Ni | 18.0 | — | 2.15 | 45 | — |
| 60% Mn— 0% Ni | 50.9 | — | 0.26 | 85 | — |
| 15% Mn—45% Ni | 3.6 | 21.4 | 1.56 | 24 | 48 |
| 45% Mn—15% Ni | 43.1 | 20.7 | 0.12 | 96 | 138 |

It will be observed that carbon is absorbed into the fusion zone from the base metal. In almost all cases, the fusion zone contained more than 1% carbon.

Knowing the fusion zone composition allows determination of the composition of welding rods and wires which would give the same results as the alloyed fluxes. It should be mentioned that the low recovery of manganese and nickel, in some cases, presents no real practical problems since this type of recovery is not encountered in other wire processes which are more suitable than the submerged arc welding process for most production welding of cast iron.

5. Optimizing the weld metal composition

The determination of an optimum fusion zone composition was based on considerations of reducing cracking propensity, increasing machinability, and achieving economy. Fusion line cracking is aggravated by the presence of continuous carbides and the hard fusion lines which they create. Fusion zone cracking can be caused by excessive amounts of continuous carbide and by thermal expansion mismatch, which also can initiate fusion line cracks. Cracking problems, then, can best be avoided by producing welds with carbide-free fusion lines, soft fusion zones with discontinuous carbides, and coefficients of thermal expansion which match that of the base metal. Machinability also is increased when the fusion lines are soft and when the fusion zone has small amounts of discontinuous carbides in a soft austenite matrix. The best economy is achieved by reducing total alloy content by substituting manganese for nickel.

The discussion of fusion zone microstructure, heat affected zone width, and thermal expansion have shown that the least cracking and best machinability will be found in welds with at least 90% austenite, the narrowest heat affected zone (0.75—0.80 mm), and a thermal expansion coefficient of about $18.4 \times 10^{-6}/°C$. at 850°C. The ranges of flux compositions which produce each of these desirable properties are shown in Figure 9.

The area common to these separate ranges is the range of filler compositions which produces the soundest welds. This is shown as the cross-hatched area of Figure 9. Also shown in Figure 9 is the point representing a 20% Mn-20% Ni composition. This composition would result in a weld metal which is about 90% austenite and only 10% carbides, has a heat affected zone of about 0.75 mm, and has a coefficient of thermal expansion of about $19.3 \times 10^{-6}/°C$. at 850°C. When economy is taken into account, the 20% Mn-20% Ni composition is optimal, though higher alloy compositions could be useful in some specific applications, for example, when dilution is very high.

The section on chemical analysis showed that the 20% Mn-20% Ni flux produces a fusion zone with 13.1% Mn and 15.9% Ni. The wire composition needed to produce an equivalent weld will vary according to the amount of dilution by the base metal; but for 30% dilution, which is typical of submerged arc and gas metal arc welding processes, the wire would have to contain 18.7% Mn and 22.7% Ni. For simplicity this wire composition of 60% Fe, 20% Ni, and 20% Mn is called 20-20 casting filler metal. This is a substantial reduction of both Ni and total alloy content from the 55 Ni rod commonly used at present, which contains at least 50% Ni.

## Claims

1. A ferrous weld structure, comprising a cast iron base metal and a weldment containing nickel and manganese, characterized in that for the production of the weldment a filler composition consisting of about 10 to 35% nickel and about 15 to 50% manganese, the balance being substantially iron, has been used.

2. A ferrous weld structure as described in claim 1, characterized in that the weldment contains at least 90% austenite and has a thermal expansion coefficient of $(15-20) \times 10^{-6}/°C$, the width of the heat affected zone being 0.75—0.80 mm.

3. A ferrous weld structure as described in claim 2, characterized in that for the production of the weldment a filler composition consisting of nickel, manganese and flux in amounts as delineated by the cross-hatched area of Fig. 9, the balance being substantially iron, has been used.

4. A ferrous weld structure as described in claim 1 and 3, characterized in that for the production of the weldment a filler composition containing about 20% nickel and about 20% manganese has been used.

5. A ferrous weld structure comprising a cast iron base metal and a weldment containing manganese, characterized in that for the production of the weldment a filler composition consisting of up to 55% manganese, the balance being substantially iron, has been used.

6. A method for welding cast iron by forming a ferrous weld pool, introducing into said pool a filler composition, and allowing the weld pool to solidify, characterized in that the metallic components of the filler composition used comprise about 10 to 35% nickel and about 15 to 50% manganese, the balance being substantially iron.

7. A method as described in claim 6, characterized in that the filler composition comprises about 20% nickel and about 20% manganese, the balance being substantially iron.

8. A method as described in claim 6, characterized in that the filler composition comprises about 10% nickel and about 50% manganese, the balance being substantially iron.

9. A method as described in claim 6, wherein the ferrous weld pool is formed by arc welding.

10. A method as described in claim 6, wherein the ferrous weld pool is formed by submerged arc welding.

11. A method as described in claim 6, wherein the ferrous weld pool is formed by gas metal arc welding.

12. A method as described in claim 6, wherein the ferrous weld pool is formed by gas welding.

13. A method as described in claim 6, characterized in that the manganese and nickel are introduced into the weld pool as part of the flux.

14. A method for welding cast iron by forming a ferrous weld pool, introducing into said pool a filler composition, and allowing the weld pool to solidify, characterized in that the metallic components of the filler composition used comprises up to 55% manganese, the balance being substantially iron.

15. The use of a composition comprising about 10 to 35% nickel and about 15 to 50% manganese, the balance being substantially iron, for welding cast iron.

16. Embodiment according to claim 15, characterized in that a composition comprising about 20% nickel and about 20% manganese, the balance being substantially iron, is used.

17. The use of a composition comprising up to 55% manganese, the balance being substantially iron, for welding cast iron.

## Patentansprüche

1. Eisen-Schweißstruktur, umfassend ein Gußeisen-Basismetall und eine Nickel und Mangan enthaltende Schweißung, dadurch gekennzeichnet, daß für die Herstellung der Schweißung eine Füllstoff-Zusammensetzung aus etwa 10 bis 35% Nickel und etwa 15 bis 50% Mangan, Rest im wesentlichen Eisen, verwendet wurde.

2. Eisen-Schweißstruktur nach Anspruch 1, dadurch gekennzeichnet, daß die Schweißung mindestens 90% Austenit enthält und einen thermischen Expansionskoeffizienten von $(15$ bis $20) \times 10^{-6}/°C$ aufweist, wobei die Weite der von der Hitze beeinflußten Zone 0,75 bis 0,80 mm beträgt.

3. Eisen-Schweißstruktur nach Anspruch 2, dadurch gekennzeichnet, daß für die Erzeugung der Schweißung eine Füllstoff-Zusammensetzung aus Nickel, Mangan und Flußmittel in Mengen, die durch den kreuzweise schraffierten Bereich von Figur 9 festgelegt sind, Rest im wesentlichen Eisen, verwendet wurde.

4. Eisen-Schweißstruktur nach den Ansprüchen 1 und 3, gekennzeichnet dadurch, daß zur Erzeugung der Schweißung eine Füllstoff-Zusammensetzung verwendet wurde, die etwa 20% Nickel und etwa 20% Mangan enthält.

5. Eisen-Schweißstruktur, umfassend ein Gußeisen-Grundmetall und eine Mangan enthaltende Schweißung, dadurch gekennzeichnet, daß zur Erzeugung der Schweißung eine Füllstoff-Zusammensetzung verwendet wurde, die aus bis zu 55% Mangan, Rest im wesentlichen Eisen, besteht.

6. Verfahren zum Schweißen von Gußeisen durch Erzeugen eines Eisen-Schweißbereiches, Einbringen einer Füllstoff-Zusammensetzung in den genannten Bereich und Verfestigen des Schweißbereiches, dadurch gekennzeichnet, daß die Metallkomponenten der verwendeten Füllstoff-Zusammensetzung etwa 110 bis 35% Nickel und etwa 15 bis 50% Mangan, Rest im wesentlichen Eisen, umfassen.

7. Verfahren nach Anspruch 6, dadurch gekennzeichnet, daß die Füllstoff-Zusammensetzung etwa 20% Nickel und etwa 20% Mangan, Rest im wesentlichen Eisen, umfaßt.

8. Verfahren nach Anspruch 6, dadurch gekennzeichnet, daß die Füllstoff-Zusammensetzung etwa 10% Nickel und etwa 50% Mangan, Rest im wesentlichen Eisen, umfaßt.

9. Verfahren nach Anspruch 6, wobei der Eisen-Schweißbereich durch Lichtbogenschweißen erzeugt wurde.

10. Verfahren nach Anspruch 6, wobei der Eisen-Schweißbereich durch Unterpulverschweißen erzeugt wurde.

11. Verfahren nach Anspruch 6, wobei der Eisen-Schweißbereich durch Lichtbogenschweißen unter Schutzgasatmosphäre erzeugt wurde.

12. Verfahren nach Anspruch 6, wobei der Eisen-Schweißbereich durch Schweißen unter Schutzgasatmosphäre erzeugt wurde.

13. Verfahren nach Anspruch 6, gekennzeichnet dadurch, daß Mangan und Nickel in den Schweißbereich als Teil des Flußmittels eingebracht werden.

14. Verfahren zum Schweißen von Gußeisen durch Erzeugung eines Eisen-Schweißbereiches, Einbringen einer Füllstoff-Zusammensetzung in den genannten Bereich und Verfestigen des Schweißbereiches, gekennzeichnet dadurch, daß die Metallbestandteile der verwendeten Füllstoff-Zusammensetzung bis zu 55% Mangan, Rest im wesentlichen Eisen, umfassen.

15. Verwendung einer etwa 10 bis 35% Nickel und etwa 15 bis 50% Mangan, Rest im wesentlichen Eisen, bestehenden Zusammensetzung um Schweißen von Gußeisen.

16. Ausführungsform nach Anspruch 15, dadurch gekennzeichnet, daß eine etwa 20% Nickel und etwa 20% Mangan, Rest im wesentlichen Eisen, bestehende Zusammensetzung verwendet wird.

17. Verwendung einer bis zu 55% Mangan, Rest im wesentlichen Eisen, umfassenden Zusammensetzung zum Schweißen von Gußeisen.

**Revendications**

1. Structure de soudure à base de fer, comprenant un métal de base formé de fonte et une soudure contenant du nickel et du manganèse, caractérisée en ce qu'une composition de charge formée d'environ 10 à 35% de nickel et environ 15 à 50% de manganèse, le reste étant pratiquement formé de fer, a été utilisée pour la formation de la soudure.

2. Structure de soudure à base de fer selon la revendication 1, caractérisée en ce que la soudure contient au moins 90% d'austénite et a un coefficient de dilatation thermique de (15—

20)$\times 10^{-6}/^\circ$C, la largeur de la zone affectée par la chaleur étant comprise entre 0,75 et 0,80 mm.

3. Structure de soudure à base de fer selon la revendication 2, caractérisée en ce qu'une composition de charge contenant du nickel, du manganèse et un flux, en quantité correspondant à la zone hachurée de la figure 9, le reste étant sensiblement formé de fer, a été utilisée pour la formation de la soudure.

4. Structure de soudure à base de fer selon l'une des revendications 1 et 3, caractérisée en ce qu'une composition de charge contenant environ 20% de nickel et environ 20% de manganèse a été utilisée pour la fabrication de la soudure.

5. Structure de soudure à base de fer comprenant un métal de base constitué de fonte et une soudure contenant du manganèse, caractérisé en ce qu'une composition de charge au maximum de 55% de manganèse, le reste étant pratiquement du fer, a été utilisée pour la formation de la soudure.

6. Procédé de soudage de fonte par formation d'un métal fondu de soudure à base de fer, par introduction dans le métal fondu, d'une composition de charge, et par solidification naturelle du métal fondu de la soudure, caractérisé en ce que les éléments métalliques de la composition de charge utilisée contiennent environ 10 à 35% de nickel et environ 15 à 50% de manganèse, le reste étant sensiblement formé de fer.

7. Procédé selon la revendication 6, caractérisé en ce que la composition de charge contient environ 20% de nickel et environ 20% de manganèse, le reste étant sensiblement formé de fer.

8. Procédé selon la revendication 6, caractérisé en ce que la composition de charge contient environ 10% de nickel et environ 50% de manganèse, le reste étant sensiblement formé de fer.

9. Procédé selon la revendication 6, dans lequel le métal fondu de la soudure à base de fer est formé par soudage à l'arc.

10. Procédé selon la revendication 6, dans lequel le métal fondu à base de fer de la soudure est formé par soudage automatique sous flux.

11. Procédé selon la revendication 6, dans lequel le métal fondu à base de fer de la soudure est formé par soudage à l'arc à électrodes consommables sous gaz protecteur.

12. Procédé selon la revendication 6, dans lequel le métal fondu à base de fer de la soudure est formé par soudage sous gaz protecteur.

13. Procédé selon la revendication 6, caractérisé en ce que le manganèse et le nickel sont introduits dans le métal fondu de la soudure comme partie du flux.

14. Procédé de soudage de fonte par formation d'un métal fondu à base de fer de soudure, par introduction dans ce métal fondu, d'une composition de charge, et par solidification naturelle du métal fondu, caractérisé en ce que les éléments métalliques de la composition de charge utilisée contiennent au maximum 55% de manganèse, le reste étant pratiquement formé de fer.

15. Application d'une composition comprenant environ 10 à 35% de nickel et environ 15 à 50% de manganèse, le reste étant pratiquement formé de fer, au soudage de la fonte.

16. Application selon la revendication 15, caractérisée en ce qu'une composition contenant 20% de nickel environ et 20% de manganèse environ, le reste étant pratiquement formé de fer, est utilisée.

17. Application d'une composition contenant au maximum 55% de manganèse, le reste étant sensiblement du fer, au soudage de la fonte.

0 038 820

Fig.1.

COMMERCIAL FLUX

% CARBIDES

50-60

30-40    40-50

20-30

10-20    0-10

0

60%Ni    60%Mn

Fig.2.

COMMERCIAL FLUX

% AUSTENITE

0

0-50

50-60

60-70

70-80

80-90    90-100

100

60%Ni    60%Mn

1

Fig.3.

COMMERCIAL FLUX

HARDNESS Rc

50-56

40-50

20-30

30-40

10-20

BELOW 10

60%Ni

60%Mn

Fig.4.

COMMERCIAL FLUX

HEAT AFFECTED ZONE
WIDTH, mm.

>2500°C

3-15

1-3

0.80-1.0

0.75-0.80

1800°C

1950°C

60%Ni

1900°C

60%Mn

2

Fig.5.

Fig.6.

Fig. 7.

# Fig. 8.

COMMERCIAL FLUX

THERMAL COEFFICIENT OF EXPANSION

✪ LONGITUDINAL FUSION ZONE CRACKS

△ FUSION LINE CRACKS

BASE METAL COEFFICIENT OF THERMAL EXPANSION AT 850°C ≈ 18.4 × $10^{-6}$ °C

15-20   10-8   15-20   20-21   21-23   13-12

60% Ni     60% Mn

# Fig. 9.

COMMERCIAL FLUX

20% Mn - 20% Ni - FLUX

— AMOUNT OF AUSTENITE IN THE WELD METAL, %

- - - HEAT AFFECTED ZONE WIDTH, m.m.

- · - COEFFICIENT OF THERMAL EXPANSION $10^{-6}$ °C

90-100% .75-.80 m.m. 15-20/°C

60% Ni     60% Mn